# EUROPÄISCHE PATENTSCHRIFT

(11) **EP 2 396 211 B1**
(45) Veröffentlichungstag und Bekanntmachung des Hinweises auf die Patenterteilung: **08.07.2015**
(21) Anmeldenummer: 09760801.2
(22) Anmeldetag: 16.11.2009
(51) Int. Cl.: F16J 15/56, F16J 15/32, F16B 4/00, B23P 11/00, B62D 3/12

(54) **VERBESSERTE ZAHNSTANGENGEHÄUSEPRESSVERBINDUNG**
IMPROVED PRESS-FIT CONNECTION FOR A RACK HOUSING
EMMANCHEMENT AMÉLIORÉ DE CARTER DE CRÉMAILLÈRE

(30) Priorität: 16.02.2009 DE 102009000900
(43) Veröffentlichungstag der Anmeldung: 21.12.2011
(73) Patentinhaber: Ford Global Technologies, LLC, Dearborn, MI 48126 (US)
(72) Erfinder: BETKE, Klaus, 59075 Hamm (DE); BÜNING, Daniel, 41372 Niederkrüchten (DE)
(74) Vertreter: Patentanwälte Bauer Vorberg Kayser
(86) Internationale Anmeldenummer: PCT/EP2009/065239
(87) Internationale Veröffentlichungsnummer: WO 2010/091749

(56) Entgegenhaltungen:
- DE-A1- 2 133 933
- DE-A1- 10 033 305
- FR-A- 1 346 426

## Beschreibung

Die Erfindung betrifft eine Zahnstangenlenkungsanordnung aus einem rohrförmigen Zahnstangengehäuse, im Folgenden auch kurz Gehäuse genannt, das der Aufnahme einer Zahnstange dient, und aus wenigstens einem Halte- und/oder Stützring, der im Innern des Gehäuses angeordnet ist und in das Zahnstangengehäuse unter Aufweitung des Halte- und/oder Stützrings gepresst ist sowie ein zugehöriges Montageverfahren. Zahnstangenlenkungen werden bei Kraftfahrzeugen eingesetzt, um die über das Lenkrad aufgebrachte drehende Lenkbewegung In eine geradlinige Bewegung zum Verschwenken der zu lenkenden Fahrzeugräder umzuwandeln. Zur Lenkkraftunterstützung kommt hierbei ein Servoantrieb zum Einsatz, der an geeigneten Stellen innerhalb des Lenkkraftflusses angeordnet werden kann.

Bei der Zahnstangenlenkung ist das Ende der Lenksäule mit einem Ritzel verbunden, welches in die Zahnstange eingreift und diese beim Drehen der Lenkung seitlich verschiebt. An beiden Enden der Zahnstange ist jeweils eine Spurstange über ein Kugelgelenk angeschlossen. Der äußerst geringe Verschleiß hat für die große Verbreitung der Zahnstangenlenkung gesorgt. Zahnstangenlenkungen haben eine gute Rückmeldung und ein sehr gutes Rückstellvermögen.

Üblicherweise wird das Zahnstangengehäuse für eine sogenannte servounterstützte Zahnstangenlenkung verwendet, wobei das Zahnstangengehäuse die Zahnstange rohrartig umgibt und in einen hydraulischen Bereich und einen mechanischen Bereich unterteilt ist.

Der mechanische Bereich ist derjenige Bereich, in dem sich der Bereich der Zahnstange bewegt, der mit Zähnen versehen ist und der mit einem mit der Lenkbewegung des Lenkrads rotierenden Ritzel in Eingriff steht. Der Ritzeleingriffsbereich befindet sich also im mechanischen Bereich des Zahnstangengehäuses. Der hydraulische Bereich ist derjenige Bereich, in dem die Zahnstange ebenfalls hineinreicht aber üblicherweise keine Verzahnung aufweist. Innerhalb des hydraulischen Bereichs ist die Zahnstange mit einem verschiebbar gelagerten Kolbenelement starr verbunden, wobei das Kolbenelement je eine Zylinderkammer in dem hydraulischen Bereich des Zahnstangengehäuses definiert. Bei Verdrehung des Lenkrads des Fahrzeugs wird ein Steuerventil betätigt, so dass Drucköl in jeweils eine der Zylinderkammern einströmt, wodurch sich der Kolben und somit die Zahnstange im Zylinder verschiebt. Die Verschiebung des Kolbens aufgrund des Drucköls dient als Kraftverstärkung für die Zahnstangen- und damit für die Lenkbewegung. Zu diesem Zweck sind das Steuerventil und das Zahnstangengehäuse über Hydraulikleitungen miteinander verbunden, so dass je nach Drehrichtung des Lenkrads die eine oder andere Zylinderkammer mittels Öl mit Druck beaufschlagt werden kann oder der Druck abgelassen werden kann.

Zwischen dem mechanischen Bereich und dem hydraulischen Bereich ist üblicherweise ein Stützring angeordnet, der die hydraulischen inneren Kräfte in das Zahnstangengehäuse ableitet und in der Regel auch ein Dichtungselement, beispielsweise einen O-Ring, hält. Am jeweiligen Ende des Zahnstangengehäuse ist ferner ein den hydraulischen oder mechanischen Bereich begrenzender Stützring vorgesehen, der beispielsweise auch als Anschlag für die Längsverschiebung der Zahnstange dient, in dem jeweils das am Ende der Zahnstange montierte Kugelgelenk auf diesen Stützring auftrifft.

Aus der DE 100 33 305 C2 ist ein das Zahnstangengehäuse aufweitendes gleichzeitiges Einpressen von Zahnstangenführungselementen in beide Endbereiche des Zahnstangengehäuses bekannt, wobei mit der Aufweitung des Zahnstangengehäuses ein Sitz für Faltenbälge geschaffen wird.

Die Aufgabe der vorliegenden Erfindung besteht darin, den Herstellungsaufwand und die Kosten für die Befestigung von Stütz- und/oder Halteringen an einem Zahnstangengehäuse zu reduzieren und dabei trotzdem den hohen Anforderungen an Festigkeit und Güte gerecht zu werden. Diese Aufgabe wird durch eine Zahnstangenlenkungsanordnung des Anspruchs 1 sowie ein Verfahren des nebengeordneten Anspruchs gelöst. Vorteilhafte Ausgestaltungen sind jeweils Gegenstand der abhängigen Ansprüche. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, charakterisiert und spezifiziert die Erfindung zusätzlich.

Erfindungsgemäß umfasst die Zahnstangenlenkungsanordnung wenigstens ein rohrförmiges Zahnstangengehäuse, das der Aufnahme einer Zahnstange dient, und wenigstens einen Halte- und/oder Stützring, der wenigstens teilweise im Innern des Zahnstangengehäuses angeordnet ist. Der Halte- und/oder Stützring, im Folgenden auch als Ring bezeichnet, ist in das Gehäuse unter Aufweitung des Halte- und/oder Stützrings gepresst. Die Aufweitung des Halte- und/oder Stützrings erfolgt beispielsweise im Wesentlichen in dessen Radialrichtung. Die erfindungsgemäße Anordnung zeichnet sich dadurch aus, dass auf der an das Gehäuse angrenzenden Außenumfangsfläche des Halte- und/oder Stützrings ein Verzahnungsabschnitt vorgesehen ist. Durch das Pressen wird die Verzahnung des Halte- und/oder Stützrings in das Gehäuse, genauer in dessen Innenwandung, geprägt und sorgt so für eine besonders sichere Verbindung, deren Haltbarkeit insbesondere bei Beanspruchung in Axialrichtung des Gehäuses über eine einfaches Verpressen von ebenen Kontaktflächen hinausgeht und ohne dass es eines teueren Verschweißens der Bauelemente bedarf. Zudem entfallen die Probleme, die beim Verschweißen aufgeworfen werden, nämlich dass der Stütz- und/oder Haltering im Inneren des Zahnstangengehäuses schwer zugänglich ist und die dabei erfolgende thermische Beanspruchung sich nachteilig auf die Stabilität der Bauteile auswirkt. Der Halte- und/oder Stützring ist bevorzugt so im Gehäuse angeordnet, dass deren Radial- und Axialrichtungen parallel zueinander sind.

Der Begriff Stütz- und/oder Haltering im Sinne der Erfindung ist weit auszulegen. Erfindungsgemäß kann es sich um ein beliebiges, im Wesentlichen ringförmiges Element mit Halte und/oder Stützfunktion handeln. Beispielswiese dient es der Führung und Abstützung der Zahnstange im Zahnstangengehäuse. Es kann ferner dem Halten und/oder Abstützen eines Dichtelements oder einem separaten Zahnstangenführungselement oder dem Verbinden zweier rohrförmiger Gehäuseteile dienen, sofern das Gehäuse mehrteilig ist.

Ferner ist der Begriff Verzahnung im Sinne der Erfindung weit auszulegen. Bei der Verzahnung handelt es sich erfindungsgemäß um eine oder mehrere Erhebungen auf der an das Gehäuse angrenzenden Fläche, insbesondere der Außenumfangsfläche, des Halte- und/oder Stützrings. Beispielsweise handelt es sich um eine singuläre Erhebung in Form eines Zahnes auf der Außenumfangsfläche des Halte- und/oder Stützrings oder um mehrere über die an das Gehäuse angrenzende Fläche verteilte Erhebungen. In einer weiteren Ausgestaltung handelt es sich auch um eine oder mehrere, gleichmäßig beabstandete ringförmige Erhebungen auf der Außenumfangsfläche.

Auch hinsichtlich der Ausgestaltung des Zahnstangengehäuses ist die Erfindung nicht eingeschränkt. Beispielsweise werden Zahnstangengehäuse aus Aluminium im Druckgussverfahren hergestellt. Nach dem Gießen ist eine spannende Bearbeitung erforderlich, um beispielsweise die Ritzeleinheit am Zahnstangengehäuse montieren zu können, auch werden Anlageflächen für die zu montierenden Teile gefräst. Weiterhin werden Grund- und Durchgangsbohrungen zur Befestigung angefertigt. Bevorzugt ist das Zahnstangengehäuse aus Stahl gefertigt. Im Vergleich zu üblichen Aluminium-Lenkgehäusen weisen Stahlgehäuse eine Reihe von Vorteilen auf, darunter eine höhere Steifigkeit und Zähigkeit des Werkstoffs. Die gefühlte Lenkungs-Präzision wird durch das steifere Stahlgehäuse merklich erhöht. Ebenso von Vorteil ist die kompakte und kostengünstige hydraulische Leitungsführung beim Stahlgehäuse, bei der die Verschraubungsschnittstellen entfallen. Das an verschiedene Fahrzeugtypen flexibel anpassbare Gehäuse wird als Schweißkonstruktion aus umgeformten, vorkonfektionierten Präzisionsstahlrohren mit Festigkeiten je nach Umformgrad von 450 bis 650 N/mm² gefertigt. Den Korrosionsschutz gewährleistet beispielsweise ein spezieller galvanischer Überzug. Die angeschweißten hydraulischen Versorgungsleitungen ermöglichen eine optimale Bauraumanpassung im Fahrzeug.

Bevorzugt ist der Verzahnungsabschnitt als ein sich in Axialrichtung des Halteund/oder Stützrings erstreckendes Gewinde ausgelegt. Durch das Gewinde kann die Demontage des Rings erleichtert werden, indem der Ring mit seinem Gewinde gegenüber dem in die Innenwandung durch Pressen eingeprägten Innengewinde verdreht wird und so die Demontage erleichtert wird. Durch die Möglichkeit der Demontage und deren Erleichterung eignet sich die erfindungsgemäße Anordnung nicht nur in besonders vorteilhafter Weise für die Verwendung bei der Wiederaufbereitung sondern kann auch besonders einfach und kostengünstig entsorgt werden. Bevorzugt sind ferner Mittel zum Ansetzen eines Demontagewerkzugs vorgesehen.

Bevorzugt ist der in das Gehäuse gepresste Verzahnungsabschnitt beabstandet zu der wenigstens einen Öffnung des Gehäuses angeordnet. Dadurch wird ein Verlierschutz erreicht, da dieser Abstandsbereich zum Entfernen des Rings von der Verzahnung überwunden werden muss, um den Ring entfernen zu können. Für den Gefall des Gewindes bedeutet dies, dass beim Herausdrehen des Ringes dieser Bereich vom Gewinde spanabhebend geschnitten werden muss, was einen erhöhten Kraftaufwand bedarf und somit auch einen Verlierschutz darstellt.

Bevorzugt wiest der Halte- und/oder Stützring wenigstens im Bereich des Verzahnungsabschnitts ein härteres Material als das Material in einem daran angrenzenden Bereich des Gehäuses auf, um so seitens des Gehäuses eine plastische Verformung des Materials im Bereich des Verzahnungsabschnitts und somit eine besonders haltbare und belastbare Verbindung zu erreichen. Beispielsweise ist der Ring aus einem härteren Material als das Gehäuse hergestellt.

Bevorzugt ist der Halte- und/oder Stützring wenigstens im Bereich des Verzahnungsabschnitts gehärtet. Gemäß einer weiteren bevorzugten Ausgestaltung ist der Halte- und/oder Stützring aus Werkzeugstahl, beispielsweise legiertem oder unlegiertem Werkzeugstahl, hergestellt.

Erfindungsgemäß ist der Halte- und/oder Stützring mit einer konischen Innenumfangsfläche zur aufweitenden Verpressung mit dem Gehäuse versehen. Mittels der konischen Innenumfangsfläche wird besonders einfach eine radiale Aufweitung des Rings unter Einwirkung einer Kraft in axialer Richtung erreicht.

Gemäß einer weiteren Ausgestaltung umfasst die Anordnung eine wenigstens teilweise im Gehäuse angeordnete Zahnstange.

Bevorzugt ist der Halte- und/oder Stützring mit einer sich an einem Rand einer Öffnung des Gehäuses abstützenden Auskragung versehen, um beispielsweise den Ring bei der Aufweitung in axialer Richtung fixiert zu halten. Die Auskragung dient ferner der Abstützung, wenn bei der Lenkverschiebung der Zahnstange gegen den Halte- und/oder Stützring als Anschlag gefahren wird.

Die Erfindung betrifft ferner ein Verfahren zur Montage wenigstens eines Halteund/oder Stützrings wenigstens teilweise im Innern eines rohrförmigen Gehäuses, das der Aufnahme einer Zahnstange dient. Das Verfahren umfasst einen Anordnungsschritt, bei dem der wenigstens eine Halte- und/oder Stützring wenigstens teilweise im Innern des Gehäuses angeordnet wird. Es umfasst ferner einen Aufweitungsschritt, bei dem der Halte- und/oder Stützring aufgeweitet wird, bevorzugt in dessen radialer Richtung, Das erfindungemäße Verfahren zeichnet sich dadurch aus, dass beim Aufweitungsschritt ein Verzahnungsabschnitt, der auf dem Gehäuse angrenzenden Außenumfangsfläche des Halteund/oder Stützrings angeordnet ist, in das Gehäuse gepresst wird. Durch das Pressen wird die Verzahnung des Halte- und/oder Stützrings in das Gehäuse, genauer in dessen Innenwandung, geprägt und sorgt so für eine besonders sichere Verbindung, deren Haltbarkeit insbesondere bei Axialbeanspruchung, über eine einfaches Verpressen von ebenen Berührflächen hinausgeht und ohne dass es eines teueren Verschweißens der Bauelemente bedarf. Zudem entfallen die Probleme, die beim Verschweißen aufgeworfen werden, nämlich dass der Stützund/oder Haltering im Inneren des Gehäuses schwer zugänglich ist und die dabei erfolgende thermische Beanspruchung sich nachteilig auf die Stabilität der Bauteile auswirkt.

Bevorzugt weist das Verfahren einen dem Anordnungsschritt vorgeschalteten Härteschritt auf, bei dem der Halte- und/oder Stützring wenigstens im Bereich des Verzahnungsabschnitts gehärtet wird.

Erfindungsgemäß wird der Aufweitungsschritt dadurch durchgeführt, dass ein konisches Presswerkzeug auf eine konische Innenumfangsfläche des Stützund/oder Halterings einwirkt.

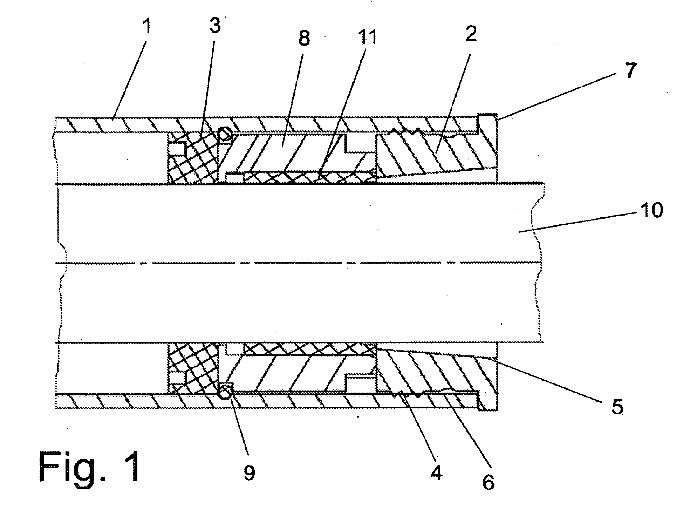

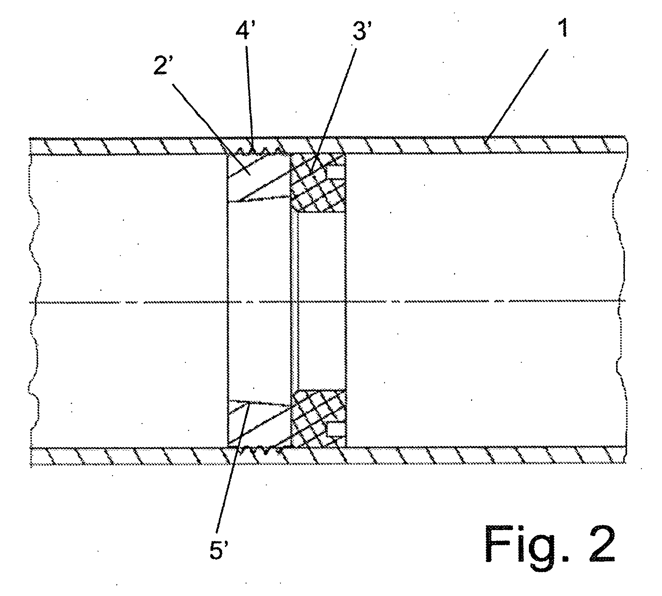

## Patentansprüche

1. Zahnstangenlenkungsanordnung, umfassend ein rohrförmiges Zahnstangengehäuse (1) und wenigstens einen Halte- und/oder Stützring (2, 2'), der wenigstens teilweise im Innern des Zahnstangengehäuses (1) angeordnet ist und in das Zahnstangengehäuse (1) unter Aufweitung des Halte- und/oder Stützrings (2, 2') gepresst ist, **dadurch gekennzeichnet, dass** auf einer an das Zahnstangengehäuse (1) angrenzenden Außenumfangsfläche des Halte- und/oder Stützrings (2, 2') ein Verzahnungsabschnitt (4, 4') vorgesehen ist und dass der Halte- und/oder Stützring (2, 2') mit einer konischen Innenumfangsfläche (5, 5') zur den Halte- und/oder Stützring (2, 2') aufweitenden Verpressung mit dem Zahnstangengehäuse (1) versehen ist.

2. Zahnstangenlenkungsanordnung nach Anspruch 1, **dadurch gekennzeichnet, dass** der Verzahnungsabschnitt (4, 4') als ein sich in Axialrichtung des Halte- und/oder Stützrings erstreckendes Gewinde ausgelegt ist.

3. Zahnstangenlenkungsanordnung nach einem der vorhergehenden Ansprüche, **dadurch gekennzeichnet, dass** der In das Zahnstangengehäuse (1) gepresste Verzahnungsabschnitt (4, 4') beabstandet zu der wenigstens einen Öffnung des Zahnstangengehäuses (1) angeordnet ist.

4. Zahnstangenlenkungsanordnung nach einem der vorhergehenden Ansprüche, **dadurch gekennzeichnet, dass** der Halte- und/oder Stützring (2, 2') wenigstens im Bereich des Verzahnungsabschnitts (4, 4') ein härteres Material als das Material in einem daran angrenzenden Bereich des Zahnstangengehäuse (1) aufweist.

5. Zahnstangenlenkungsanordnung nach einem der vorhergehenden Ansprüche, **dadurch gekennzeichnet, dass** der Halte- und/oder Stützring (2, 2') wenigstens im Bereich des Verzahnungsabschnitts (4, 4') gehärtet ist.

6. Zahnstangenlenkungsanordnung nach einem der vorhergehenden Ansprüche, **dadurch gekennzeichnet, dass** der Halte- und/oder Stützring (2, 2') aus Werkzeugstahl hergestellt ist.

7. Zahnstangenlenkungsanordnung nach einem der vorhergehenden Ansprüche, **dadurch gekennzeichnet, dass** der Halte- und/oder Stützring (2, 2') aus Werkzeugstahl hergestellt ist.

8. Zahnstangenlenkungsanordnung nach einem der vorhergehenden Ansprüche, **dadurch gekennzeichnet, dass** wenigstens teilweise im Zahnstangengehäuse (1) eine Zahnstange (10) angeordnet ist.

9. Zahnstangenlenkungsanordnung nach einem der vorhergehenden Ansprüche, **dadurch gekennzeichnet, dass** der Halte- und/oder Stützring (2, 2') mit einer sich an einem Rand einer Öffnung des Zahnstangengehäuses (1) abstützenden Auskragung (7) versehen ist.

10. Verfahren zur Montage wenigstens eines Halte- und/oder Stützrings (2,2') wenigstens teilweise im Innern eines rohrförmigen Zahnstangengehäuses (1) einer Zahnstangenlenkungsanordnung, umfassend einen Anordnungsschritt, bei dem der wenigstens eine Halte- und/oder Stützring (2, 2') wenigstens teilweise Im Innern des Zahnstangengehäuses (1) angeordnet wird einen Aufweitungsschritt, bei dem der Halte- und/oder Stützring (2, 2') aufgeweitet wird, **dadurch gekennzeichnet, dass** beim Aufweitungsschritt ein Verzahnungsabschnitt (4, 4'), der auf einer an das Zahnstangengehäuse (1) angrenzenden Außenumfangsfläche des Halteund/oder Stützrings (2, 2') angeordnet ist, in das Zahnstangengehäuse (1) gepresst wird, und dass der Aufweitungsschritt dadurch durchgeführt wird, dass ein konisches Presswerkzeug auf eine konische Innenumfangsfläche (5, 5') des Stütz-und/oder Halterings (2, 2') einwirkt.

11. Verfahren gemäß dem vorhergehenden Anspruch, **gekennzeichnet durch** einen dem Anordnungsschritt vorgeschalteten Härteschritt, bei dem der Halte- und/oder Stützring (2, 2') wenigstens im Bereich des Verzahnungsabschnitts (4, 4') gehärtet wird.

12. Verfahren gemäß einem der vorhergehenden Ansprüche 10 bis 11, **dadurch gekennzeichnet, dass** der Verzahnungsabschnitt (4, 4') als ein sich in Axialrichtung des Halte- und/oder Stützrings erstreckendes Gewinde ausgelegt ist.

13. Verfahren gemäß einem der vorhergehenden Ansprüche 10 bis 12, **dadurch gekennzeichnet, dass** beim Aufweitungsschritt ein Aufweiten des Zahnstangengehäuses (1) verhindert wird.

## Claims

1. A rack steering assembly comprising a tubular rack housing (1) and at least one retention and/or support ring (2, 2') which is at least partially disposed inside the rack housing (1) and is pressed into the rack housing (1) while the retention and/or support ring (2, 2') is expanded, **characterised in that** a toothed section (4, 4') is provided on the outer circumferential surface of the retention and/or support ring (2, 2') adjacent to the rack housing (1) and that the retention and/or support ring (2, 2') is provided with a conical inner circumferential surface (5, 5') for press-fitting with the rack housing (1), which press-fitting expands the retention and/or support ring (2, 2').

2. The rack steering assembly according to claim 1, **characterised in that** the toothed section (4, 4') is configured as a thread extending in the axial direction of the retention and/or support ring.

3. The rack steering assembly according to any one of the preceding claims, **characterised in that** the toothed section (4, 4') pressed into the rack housing (1) is disposed at a distance from the at least one opening of the rack housing (1).

4. The rack steering assembly according to any one of the preceding claims, **characterised in that** the retention and/or support ring (2, 2'), at least in the area of the toothed section (4, 4'), has a harder material than the material in an area of the rack housing (1) adjacent thereto.

5. The rack steering assembly according to any one of the preceding claims, **characterised in that** the retention and/or support ring (2, 2') is hardened at least in the area of the toothed section (4, 4').

6. The rack steering assembly according to any one of the preceding claims, **characterised in that** the retention and/or support ring (2, 2') is made from
tool steel.

7. The rack steering assembly according to any one of the preceding claims, **characterised in that** the rack housing (1) is substantially made from steel.

8. The rack steering assembly according to any one of the preceding claims, **characterised in that** a rack (10) is at least partially disposed in the rack housing (1).

9. The rack steering assembly according to any one of the preceding claims, **characterised in that** the retention and/or support ring (2, 2') is provided with a collar (7) supported on an edge of an opening of the rack housing (1).

10. A method for the assembly of at least one retention and/or support ring (2, 2') at least partially inside a tubular rack housing (1) of a rack steering assembly, comprising
a disposing step, wherein the at least one retention and/or support ring (2, 2') is disposed at least partially inside the rack housing (1),
an expansion step, wherein the retention and/or support ring (2, 2') is expanded,
**characterised in that** a toothed section (4, 4') disposed on an outer circumferential surface of the retention and/or support ring (2, 2') adjacent to the rack housing (1) is pressed into the rack housing (1) during the expansion step, and
that the expansion step is carried out by a conical pressing tool acting on a conical inner circumferential surface (5, 5') of the support and/or retention ring (2, 2').

11. The method according to the preceding claim, **characterised by** a hardening step preceding the disposing step, in which the retention and/or support ring (2, 2') is hardened at least in the area of the toothed section (4, 4').

12. The method according to any one of the preceding claims 10 to 11, **characterised in that** the toothed section (4, 4') is configured as a thread extending in the axial direction of the retention and/or support ring.

13. The method according to any one of the preceding claims 10 to 12, **characterised in that** an expansion of the rack housing (1) is prevented during the expansion step.

## Revendications

1. Ensemble de direction à crémaillère, comprenant un carter de crémaillère (1) tubulaire et au moins un anneau de retenue et/ou d'appui (2, 2') qui est disposé au moins en partie à l'intérieur du carter de crémaillère (1) et est serré dans le carter de crémaillère (1) en élargissant ledit anneau de retenue et/ou d'appui (2, 2'), **caractérisé par le fait que** sur une surface circonférentielle extérieure de l'anneau de retenue et/ou d'appui (2, 2'), qui est contiguë au carter de crémaillère (1), est prévue une portion à denture (4, 4') et que ledit anneau de retenue et/ou d'appui (2, 2') est pourvu d'une surface circonférentielle intérieure (5, 5') conique pour l'assemblage à serrage avec le carter de crémaillère (1), élargissant l'anneau de retenue et/ou d'appui (2, 2').

2. Ensemble de direction à crémaillère selon la revendication 1, **caractérisé par le fait que** ladite portion à denture (4, 4') est conçue comme un filetage s'étendant dans la direction axiale de l'anneau de retenue et/ou d'appui.

3. Ensemble de direction à crémaillère selon l'une quelconque des revendications précédentes, **caractérisé par le fait que** la portion à denture (4, 4') serrée dans le carter de crémaillère (1) est disposée à distance par rapport à ladite au moins une ouverture du carter de crémaillère (1).

4. Ensemble de direction à crémaillère selon l'une quelconque des revendications précédentes, **caractérisé par le fait que** l'anneau de retenue et/ou d'appui (2, 2') présente au moins au niveau de la portion à denture (4, 4') un matériau plus dur que le matériau dans une zone y contiguë du carter de crémaillère (1).

5. Ensemble de direction à crémaillère selon l'une quelconque des revendications précédentes, **caractérisé par le fait que** l'anneau de retenue et/ou d'appui (2, 2') est durci au moins au niveau de la portion à denture (4, 4').

6. Ensemble de direction à crémaillère selon l'une quelconque des revendications précédentes, **caractérisé par le fait que** ledit anneau de retenue et/ou d'appui (2, 2') est réalisé en acier à outils.

7. Ensemble de direction à crémaillère selon l'une quelconque des revendications précédentes, **caractérisé par le fait que** ledit carter de crémaillère (1) est réalisé pour l'essentiel en acier.

8. Ensemble de direction à crémaillère selon l'une quelconque des revendications précédentes, **caractérisé par le fait qu'**une crémaillère (10) est disposée au moins en partie dans le carter de crémaillère (1).

9. Ensemble de direction à crémaillère selon l'une quelconque des revendications précédentes, **caractérisé par le fait que** ledit anneau de retenue et/ou d'appui (2, 2') est pourvu d'une saillie (7) prenant appui sur un bord d'une ouverture du carter de crémaillère (1).

10. Procédé de montage d'au moins un anneau de retenue et/ou d'appui (2, 2') au moins en partie à l'intérieur d'un carter de crémaillère (1) tubulaire d'un ensemble de direction à crémaillère, comprenant
une étape de disposition dans laquelle ledit au moins un anneau de retenue et/ou d'appui (2, 2') est disposé au moins en partie à l'intérieur du carter de crémaillère (1),
une étape d'élargissement dans laquelle l'anneau de retenue et/ou d'appui (2, 2') est élargi,
**caractérisé par le fait que**, dans l'étape d'élargissement, une portion à denture (4, 4') qui est disposée sur une surface circonférentielle extérieure de l'anneau de retenue et/ou d'appui (2, 2'), contiguë au carter de crémaillère (1), est serrée dans le carter de crémaillère (1) et que l'étape d'élargissement est mise en oeuvre **par le fait qu'**un outil conique de presse agit sur une surface circonférentielle intérieure (5, 5') conique de l'anneau de retenue et/ou d'appui (2, 2').

11. Procédé selon la revendication précédente, **caractérisé par** une étape de durcissement qui est effectuée en amont de l'étape de disposition et dans laquelle ledit anneau de retenue et/ou d'appui (2, 2') est durci au moins au niveau de la portion à denture (4, 4').

12. Procédé selon l'une quelconque des revendications précédentes 10 à 11, **caractérisé par le fait que** ladite portion à denture (4, 4') est conçue comme un filetage s'étendant dans la direction axiale de l'anneau de retenue et/ou d'appui.

13. Procédé selon l'une quelconque des revendications précédentes 10 à 12, **caractérisé par le fait que**, dans l'étape d'élargissement, un élargissement du carter de crémaillère (1) est empêché.
